# EUROPEAN PATENT APPLICATION

(11) **EP 4 548 996 A1**
(43) Date of publication of application: **07.05.2025**
(21) Application number: 24199393.0
(22) Date of filing: 10.09.2024
(51) Int. Cl.: B01D 53/00, B01D 53/26, F25J 3/06

(54) **CARBON DIOXIDE SEPARATION AND RECOVERY SYSTEM**

(30) Priority: 27.09.2023 KR 20230129945
(71) Applicant: Institute for Advanced Engineering, Yongin-si, Gyeonggi-do 17180 (KR)
(72) Inventor: PARK, Sungho, 17149 Yongin-si (KR); LEE, Changhyeong, 46055 Busan (KR); HWANG, Seonghyeon, 46284 Busan (KR); LIM, Jong Woong, 07336 Seoul (KR); CHUNG, Soh Myung, Gyeonggi-do, 17161 (KR); CHOI, Kwang Soon, Seoul, 07226 (KR); PARK, Jun Seok, Gyeonggi-do, 17161 (KR)
(74) Representative: BCKIP Part mbB

(57) **Abstract**

The present invention relates to a carbon dioxide separation and recovery system. The carbon dioxide separation and recovery system according to an embodiment of the present invention comprises an exhaust gas sensible heat recovery part which recovers sensible heat of exhaust gas and generates electric energy by using the sensible heat of the recovered exhaust gas; a moisture removal part which is connected to the exhaust gas sensible heat recovery part and removes moisture contained in the sensible heat recovery exhaust gas from which the sensible heat is recovered by using the electric energy generated in the exhaust gas sensible heat recovery part; and a separation part which is connected to the moisture removal part to receive the sensible heat recovery exhaust gas from which moisture is removed by the moisture removal part, and separates solid carbon dioxide from the sensible heat recovery exhaust gas from which moisture is removed.

## Description

### CROSS-REFERENCE TO RELATED APPLICATION(S)

This application is based on and claims priority of Korean Patent Application No. 10- 2023-0129945, filed on September 27, 2023, with the Korean Intellectual Property Office.

### TECHNICAL FIELD

The present invention relates to a carbon dioxide separation and recovery system.

### BACKGROUND

As global warming gradually accelerates, problems such as abnormal high temperature occurrence and rising sea levels are occurring worldwide. The main cause of this worsening global warming is the increase in greenhouse gas emissions, and as carbon dioxide emissions account for the largest proportion of greenhouse gases, the need for the reduction of carbon dioxide emissions is increasingly important.

However, since the current industrial energy usage efficiency is at the maximum level, there is concern that excessive reduction of carbon dioxide emissions may lead to weakening industrial competitiveness. Accordingly, in addition to efforts to reduce carbon dioxide emissions, direct reduction through carbon dioxide capture, utilization, and storage (CCUS, hereinafter referred to as "carbon dioxide capture, storage, and utilization technology") is required as a technological alternative.

The carbon dioxide capture, storage, and utilization technology includes technology for converting carbon dioxide into useful resource materials with high added value by utilizing carbon dioxide in addition to technology for capturing carbon dioxide generated from industrial facilities and storing the captured carbon dioxide underground or the like.

Among these, the carbon dioxide capture technology is classified into post-combustion capture technology, pre-combustion capture technology, and oxy-fuel combustion technology.

Specifically, the post-combustion capture technology is a method of separating carbon dioxide from the exhaust gas discharged when fossil fuel is combusted with air, and the pre-combustion capture technology is a method of separating carbon dioxide in a process of producing hydrogen from fossil fuel, converting synthesis gas generated after gasifying fossil fuel into carbon dioxide and hydrogen through the water gas shift reaction, and then separating only carbon dioxide. The oxy-fuel combustion technology is a method of separating oxygen in the air instead of air and combusting fossil fuel to generate and separate only carbon dioxide after combustion.

Among these, the post-combustion capture technology is classified into such as a wet-type absorption method utilizing a wet absorbent of the amine series, a dry-type absorption method utilizing a solid adsorbent, a membrane separation method utilizing a separation membrane, and a phase separation method utilizing phase changes.

However, in the case of the wet absorption method, there are problems that the compression work required to liquefy the carbon dioxide separated from the wet absorbent after separating carbon dioxide from the wet absorbent is large and high energy is required to regenerate the wet absorbent to the initial state. The dry-type absorption method also has problems in which the compression work required to liquefy the carbon dioxide separated from the solid adsorbent after separating carbon dioxide from the solid adsorbent is large, and high energy is required to regenerate the solid adsorbent to the initial state. In addition, in the case of the membrane separation method, there are problems such as difficulty in facilitating mass storage and poor durability due to the deterioration of the membrane. In addition, in the case of the phase separation method, since a pressure higher than a triple point is required to separate carbon dioxide from the exhaust gas in the liquid phase, there is a disadvantage of showing a low energy efficiency.

To solve these problems, a cryogenic carbon capture method has been proposed which cools the exhaust gas to a temperature at which the carbon dioxide contained in the exhaust gas freezes to separate and recover the carbon dioxide contained in the exhaust gas into a solid state. The cryogenic carbon capture method has an advantage in which high-concentration carbon dioxide may be separated and recovered and then be stored immediately after capturing but there is a problem that the energy required to freeze the carbon dioxide contained in the exhaust gas increases depending on the concentration of the exhaust gas. In addition, when the moisture contained in the exhaust gas is not completely removed, there is a problem that the purity of the carbon dioxide separated and recovered from the exhaust gas is reduced due to the moisture, and the equipment is damaged.

Therefore, there is a need to develop a carbon dioxide separation and recovery system that may not only increase the purity of carbon dioxide separated and recovered from the exhaust gas by utilizing the sensible heat of the recovered exhaust gas to effectively remove moisture contained in the exhaust gas, but also have an improved energy efficiency by reducing the energy consumed in separation and recovery of carbon dioxide from the exhaust gas.

### SUMMARY

Embodiments of the present invention have been devised to solve the above-described conventional problems, and is directed to providing a carbon dioxide separation and recovery system that may not only increase the purity of carbon dioxide separated and recovered from the exhaust gas by utilizing the sensible heat of the recovered exhaust gas to effectively remove the moisture contained in the exhaust gas, but also have improved energy efficiency by reducing the energy consumed in separating and recovering carbon dioxide from the exhaust gas.

According to one aspect of the present invention, a carbon dioxide separation and recovery system may be provided including: an exhaust gas sensible heat recovery part which recovers sensible heat of exhaust gas and generates electrical energy by using the sensible heat of the recovered exhaust gas; a moisture removal part which is connected to the exhaust gas sensible heat recovery part and removes moisture contained in the sensible heat recovery exhaust gas from which the sensible heat is recovered by using the electric energy generated in the exhaust gas sensible heat recovery part; and a separation part which is connected to the moisture removal part, receives the sensible heat recovery exhaust gas from which the moisture has been removed by the moisture removal part, and separates solid carbon dioxide from the sensible heat recovery exhaust gas from which the moisture is removed.

In addition, the carbon dioxide separation and recovery system may further include a first flow path configured to provide a path through which a first refrigerant capable of recovering the sensible heat of the exhaust gas by exchanging heat with the exhaust gas flows; and a second flow path configured to provide a path through which a second refrigerant capable of removing the moisture contained in the sensible heat recovery exhaust gas by exchanging heat with the sensible heat recovery exhaust gas flows;

In addition, the moisture removal part may include a compressor at a moisture removal part side which is disposed on the second flow path; a heat exchanger at the moisture removal part side which is disposed on the second flow path and cools the second refrigerant discharged from the compressor at the moisture removal part side; and a condenser which is disposed on the second flow path and condenses the moisture contained in the sensible heat recovery exhaust gas by exchanging heat between the second refrigerant cooled by the heat exchanger at the moisture removal part side and the sensible heat recovery exhaust gas.

In addition, the exhaust gas sensible heat recovery part may include a heat exchanger at a sensible heat recovery part side which is disposed on the first flow path and transfers the sensible heat of the exhaust gas to the first refrigerant; and a generator which is disposed on the first flow path, receives the first refrigerant discharged from the heat exchanger at the sensible heat recovery part side, and recovers the sensible heat of the exhaust gas recovered to the first refrigerant as the electric energy, and the electric energy recovered through the generator may be supplied to the compressor at the moisture removal part side.

In addition, the exhaust gas sensible heat recovery part may include a generator which is disposed on the first flow path and recovers the sensible heat of the exhaust gas recovered to the first refrigerant as the electric energy; a recuperator which is disposed on the first flow path and cools the first refrigerant passed through the generator; and a heatsink which is disposed on the first flow path and removes heat of the first refrigerant discharged from the recuperator.

In addition, the carbon dioxide separation and recovery system may further include a refrigerant heat recovery part which recovers the heat of the second refrigerant heat-exchanged with the sensible heat recovery exhaust gas to the first refrigerant, and the refrigerant heat recovery part includes a compressor at refrigerant heat recovery part which receives and compresses the first refrigerant passed through the heatsink, and the first refrigerant compressed by the compressor at the refrigerant heat recovery part side may be supplied to the heat exchanger at the moisture removal part side.

In addition, the exhaust gas sensible heat recovery part may further include a compressor at a sensible heat recovery part side which receives and compresses the first refrigerant passed through the heatsink, and the first refrigerant compressed by the compressor at the sensible heat recovery part side may be supplied to the recuperator.

In addition, the heat exchanger at the sensible heat recovery part side may receive at least one of the first refrigerant discharged from the recuperator and the first refrigerant discharged from the heat exchanger at the moisture removal part side to exchange heat with the exhaust gas.

In addition, the condenser may include a main body part to which the sensible heat recovery exhaust gas is supplied; a tube part which is provided inside the main body part and to which the second refrigerant is supplied and flows; and a surface treatment part which is provided on at least a part of an outer surface of the tube part and is made of a hydrophobic substance, and the moisture contained in the sensible heat recovery exhaust gas supplied to the main body part is condensed and removed by cooling heat of the second refrigerant supplied to the tube part, and the sensible heat recovery exhaust gas is cooled so that the density of the sensible heat recovery exhaust gas may increase.

In addition, the separation part may include a compressor at a separation part side which is connected to the condenser and generates a compressed gas by receiving and compressing the sensible heat recovery exhaust gas having the moisture removed and the density increased; A pre-cooler which is connected to the compressor at the separation part side and precools the compressed gas; and a separator which is connected to the pre-cooler and separates the solid carbon dioxide from the compressed gas precooled by the pre-cooler, and the remaining compressed gas after the solid carbon dioxide is separated is supplied to the pre-cooler and may be heat-exchanged with the compressed gas passed through the compressor at the separation part side.

In addition, the Carbon dioxide separation and recovery system may further include a supply part which is connected to the heat exchanger at the moisture removal part side and supplies fluid for thermal transfer to the heat exchanger at the moisture removal part side, and the heat exchanger at the moisture removal part side may exchange heat between the fluid for thermal transfer supplied from the supply part and the second refrigerant discharged from the compressor at the moisture removal part side to cool the second refrigerant.

According to embodiments of the present invention, the purity of carbon dioxide separated and recovered from the exhaust gas can be increased by converting sensible heat recovered from the exhaust gas into electric energy and effectively removing moisture contained in the exhaust gas by utilizing the converted electric energy.

In addition, as a density of the exhaust gas increases in a process of removing the moisture contained in the exhaust gas by using the electric energy converted from the sensible heat recovered from the exhaust gas, a compression work required can be dramatically reduced in a process of separating and recovering carbon dioxide from the exhaust gas.

In addition, the heat generated in the process of removing the moisture contained in the exhaust gas by using the electric energy converted from the sensible heat recovered from the exhaust gas is reused for electric energy conversion, thereby having improved energy efficiency.

### BRIEF DESCRIPTION OF DRAWINGS

FIG. 1 is a process diagram illustrating a carbon dioxide separation and recovery system according to one embodiment of the present invention.
FIG. 2 is a conceptual diagram illustrating a moisture removal part of the carbon dioxide separation and recovery system of FIG. 1.
FIG. 3 is a process diagram illustrating a carbon dioxide separation and recovery system according to another embodiment of the present invention.

### DETAILED DESCRIPTION OF EXEMPLARY EMBODIMENTS

Hereinafter, specific embodiments for implementing the idea of the present invention will be described in detail with reference to the drawings.

In addition, in describing the present invention, when it is determined that a detailed description of a related known configuration or function may obscure the gist of the present invention, the detailed description will be omitted.

Also, when it is said that a component is "connected" to another component, it should be understood that it may be directly connected to that other component while there may also be another component in between.

The terminology used herein is for the purpose of describing particular embodiments only and is not intended to limit the present invention. Singular expressions include plural expressions unless the context clearly indicates otherwise.

In addition, it is to be noted in advance that the expressions such as one side, the other side, the upper side, the lower side, etc. in this specification are explained based on the illustration in the drawing, and may be expressed differently if the direction of the object is changed. For the same reason, some components in the attached drawings are exaggerated, omitted, or schematically illustrated, and the size of each component does not entirely reflect the actual size.

Additionally, terms including ordinal numbers such as first, second, etc. may be used to describe various components, but the components are not limited by such terms. These terms are used solely to distinguish one component from another component.

The word "including" as used in the specification means specifying a particular characteristic, region, integer, step, operation, element, and/or component, but does not exclude the presence or addition of any other particular characteristic, region, integer, step, operation, element, component, and/or group.

Hereinafter, a specific configuration of a carbon dioxide separation and recovery system according to one embodiment of the present invention will be described with reference to the drawings.

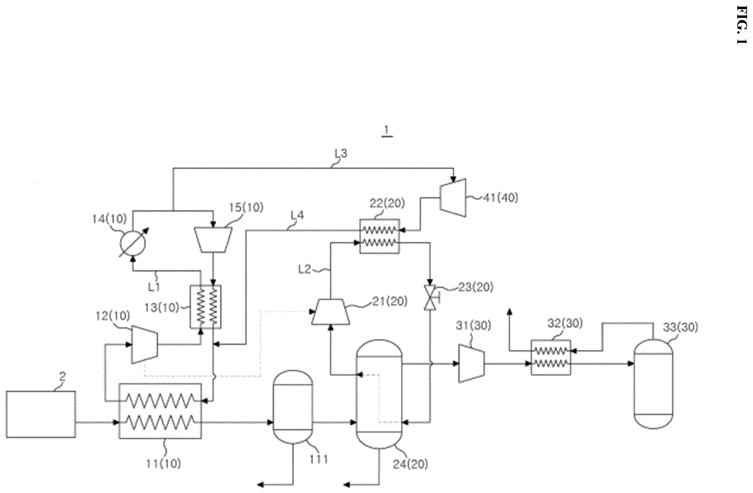

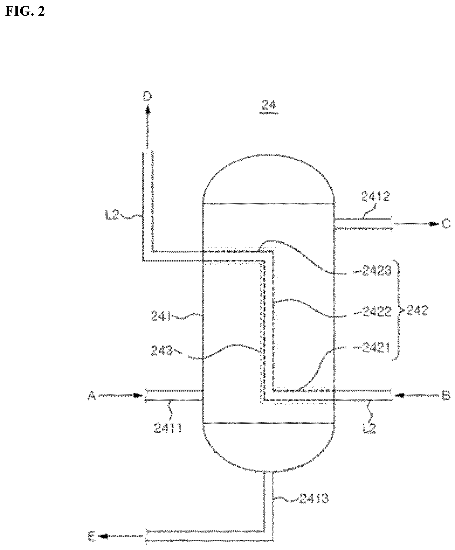

Referring to FIGS. 1 and 2, a carbon dioxide separation and recovery system 1 according to one embodiment of the present invention may include an exhaust gas sensible heat recovery part 10, a moisture removal part 20, a separation part 30, and a refrigerant heat recovery part 40.

The exhaust gas sensible heat recovery part 10 may receive exhaust gas from an exhaust gas discharge source 2 and recover sensible heat of the exhaust gas. In addition, the sensible heat of the recovered exhaust gas may be used to generate electrical energy. The exhaust gas discharged from the exhaust gas discharge source 2 may be a flue gas composed of, for example, nitrogen, oxygen, carbon dioxide, and water vapor. However, this is only an example for convenience of description, and the composition of the exhaust gas may change to various compositions containing at least carbon dioxide.

To this end, the exhaust gas sensible heat recovery part 10 may include a heat exchanger at the sensible heat recovery part side 11, a generator 12, a recuperator 13, a heatsink 14, and a compressor at the sensible heat recovery part side 15.

In this case, the heat exchanger at the sensible heat recovery part side 11, the generator 12, the recuperator 13, the heatsink 14, and the compressor at the sensible heat recovery part side 15 may be disposed on a first flow path L1. Here, the first flow path L1 may provide a path through which a first refrigerant flows and form a closed loop which allows the first refrigerant to circulate through the heat exchanger at the sensible heat recovery part side 11, the generator 12, the recuperator 13, the heatsink 14, and the compressor at the sensible heat recovery part side 15. For example, the first refrigerant may be a refrigerant capable of recovering the sensible heat of the exhaust gas by exchanging heat with exhaust gas.

The heat exchanger at the sensible heat recovery part side 11 may transfer the sensible heat of the exhaust gas to the first refrigerant flowing through the first flow path L 1. The heat exchanger at the sensible heat recovery part side 11 may receive at least one of the first refrigerant discharged from the recuperator 13 and the first refrigerant discharged from the heat exchanger at the moisture removal part side 22 of the moisture removal part 20 to be described later and exchange heat with the exhaust gas. In other words, the heat exchanger at the sensible heat recovery part side 11 may transfer the sensible heat of the exhaust gas to the first refrigerant to lower a temperature of the exhaust gas.

Meanwhile, since the exhaust gas discharged from the heat exchanger at the sensible heat recovery part side 11 refers to the exhaust gas from which the sensible heat is removed, hereinafter, for the convenience of description, the exhaust gas discharged from the heat exchanger at the sensible heat recovery part side 11 will be referred to as "sensible heat recovery exhaust gas".

In this case, the sensible heat recovery exhaust gas discharged from the heat exchanger at the sensible heat recovery part side 11 may have a temperature similar to the temperature of the atmosphere and be supplied to a pre-condenser 111. Accordingly, at least a part of moisture contained in the sensible heat recovery exhaust gas may be removed through the pre-condenser 111, and the remainder of the moisture contained in the sensible heat recovery exhaust gas may be removed in the condenser 24 of the moisture removal part 20 to be described later.

The generator 12 receives the first refrigerant discharged from the heat exchanger at the sensible heat recovery part side 11 and may recover the sensible heat of the exhaust gas recovered to the first refrigerant as the electrical energy. The electric energy recovered in this way may be supplied to the compressor at the moisture removal part side 21 of the moisture removal part 20 to be described later.

The recuperator 13 may cool the first refrigerant passed through the generator 12. The recuperator 13 may exchange heat between the first refrigerant compressed by the compressor at the sensible heat recovery part side 15 and the first refrigerant passed through the generator 12. Since the heat of the first refrigerant is removed through the heatsink 14 before the first refrigerant is compressed by the compressor at the sensible heat recovery part side 15, the first refrigerant compressed by the compressor at the sensible heat recovery part side 15 may cool the first refrigerant passed through the generator 12.

The heatsink 14 may remove the heat of the first refrigerant discharged from the recuperator 13. The first refrigerant from which the heat has been removed by the heatsink 14 may be supplied to the compressor at the sensible heat recovery part side 15 or to a compressor at the refrigerant heat recovery part side 41 of the refrigerant heat recovery part 40 to be described later. This will be described later.

The compressor at the sensible heat recovery part side 15 may receive and compress the first refrigerant passed through the heatsink 14. The first refrigerant compressed by the compressor at the sensible heat recovery part side 15 may be supplied to the recuperator 13, and the cold heat of the first refrigerant supplied to the recuperator 13 may be transferred to the first refrigerant passed through the generator 12.

The moisture removal part 20 may remove moisture contained in the sensible heat recovery exhaust gas by using the electric energy generated in the exhaust gas sensible heat recovery part 10. To this end, the moisture removal part 20 may include the compressor at the moisture removal part side 21, the heat exchanger at the moisture removal part side 22, an expansion valve 23, and the condenser 24.

In this case, the compressor at the moisture removal part side 21, the heat exchanger at the moisture removal part side 22, the expansion valve 23, and the condenser 24 may be disposed on a second flow path L2. Here, the second flow path L2 is a part which provides a path through which the second refrigerant capable of removing moisture contained in the sensible heat recovery exhaust gas by exchanging heat with the sensible heat recovery exhaust gas may flow and may form a closed cycle allowing the second refrigerant to circulate through the compressor at the moisture removal part side 21, the heat exchanger at the moisture removal part side 22, the expansion valve 23, and the condenser 24.

The compressor at the moisture removal part side 21 may be driven by the electrical energy generated by the generator 12 and compress the second refrigerant discharged from the condenser 24.

The heat exchanger at the moisture removal part side 22 may cool the second refrigerant discharged from the compressor at the moisture removal part side 21. The heat exchanger at the moisture removal part side 22 may exchange heat between the second refrigerant compressed by the compressor at the moisture removal part side 21 and the first refrigerant supplied from the exhaust gas sensible heat recovery part 10. Here, the first refrigerant supplied from the exhaust gas sensible heat recovery part 10 to the heat exchanger at the moisture removal part side 22 may be a refrigerant which is used in generating electric energy in the generator 12 and then is cooled and compressed, and the first refrigerant heat-exchanged with the second refrigerant may be recovered again to the exhaust gas sensible heat recovery part 10.

The expansion valve 23 may expand the second refrigerant discharged from the heat exchanger at the moisture removal part side 22. The second refrigerant expanded through the expansion valve 23 may be supplied to the condenser 24.

The condenser 24 may condense moisture contained in the sensible heat recovery exhaust gas by exchanging heat between the second refrigerant passed through the expansion valve 23 and the sensible heat recovery exhaust gas. Here, the sensible heat recovery exhaust gas supplied to the condenser 24 may be the sensible heat recovery exhaust gas which has passed through the pre-condenser 111 disposed on a front end of the condenser 24. At least a part of the moisture contained in the sensible heat recovery exhaust gas may be removed while passing through the pre-condenser 111.

At this time, the condenser 24 may include a main body part 241 to which the sensible heat recovery exhaust gas is supplied, a tube part 242 which is disposed inside the main body part 241 and to which the second refrigerant is supplied and flows, and a surface treatment part 243 which is disposed on at least a part of the outer surface of the tube part 242 and is made of a hydrophobic substance.

The main body part 241 may include an internal space through which the sensible heat removal exhaust gas from which at least a part of moisture is removed while passing through the pre-condenser 111 may flow. As illustrated in FIG. 2, sensible heat removal exhaust gas A supplied to the inside of the main body part 241 through a supply pipe 2411 may be heat-exchanged with a second refrigerant B supplied to one end of the tube part 242, and sensible heat removal exhaust gas C heat-exchanged with the second refrigerant may be discharged through a discharge pipe 2412. In addition, a second refrigerant D heat-exchanged with the sensible heat removal exhaust gas A supplied to the inside of the main body part 241 through the supply pipe 2411 may be discharged to the other end of the tube part 242.

The tube part 242 is a part which is connected to the second flow path L2 to receive the second refrigerant and may be disposed on the inside of the main body part 241. The tube parts 242 may be divided into a lower tube 2421 connected to the second flow path L2 at a lower portion of the main body part 241, an upper tube 2423 connected to the second flow path L2 at an upper portion of the main body part 241, and a connection tube 2422 connecting the lower tube 2421 and the upper tube 2423. As such, when the tube part 242 is divided into the lower tube 2421, the connection tube 2422, and the upper tube 2423, the heat exchange efficiency between the sensible heat removal exhaust gas and the second refrigerant may be controlled. For example, the lower tube 2421, the connection tube 2422, and the upper tube 2423 may be formed integrally or manufactured separately, and then interconnected.

Meanwhile, since the second refrigerant supplied to the inside of the tube part 242 is a fluid which may be cooled to -40°C or more, moisture contained in the sensible heat removal exhaust gas may condense on an outer surface of the tube part 242, and sensible heat removal exhaust gas may be cooled to increase the density of the sensible heat removal exhaust gas. In other words, since the outer surface of the tube part 242 is a surface on which sensible heat removal exhaust gas may be condensed, when a hydrophobic substance is coated on at least a part of the outer surface of the tube part 242, moisture does not condense on the outer surface of the tube part 242 and may be peeled off in a form of moisture particles simultaneously with condensation. The peeled-off moisture particles may accumulate at the lower portion of the main body part 241 and, if necessary, may be discharged to the outside of the main body part 241.

Meanwhile, when the sensible heat removal exhaust gas supplied to the main body part 241 is heat-exchanged with the second refrigerant flowing through the tube part 242, the temperature of the sensible heat removal exhaust gas may decrease and the density of sensible heat removal exhaust gas may increase. As such, the sensible heat removal exhaust gas with increased density, may be supplied to the compressor at the separation part side 31 of the separation part 30 to be described later. In other words, since the density of the sensible heat removal exhaust gas supplied to the compressor at the separation part side 31 of the separation part 30 to be described later increases, the power consumption of the compressor at the separation part side 31 of the separation part 30 to be described later may be reduced.

The separation part 30 may receive the sensible heat recovery exhaust gas from which moisture has been removed by the moisture removal part 20, and may separate solid carbon dioxide from the sensible heat recovery exhaust gas from which moisture has been removed. To this end, the separation part 30 may include a compressor at the separation part side 31, a pre-cooler 32, and a separator 33.

The compressor at the separation part side 31 may be connected to the condenser 24, and generate compressed gas by receiving and compressing the sensible heat recovery exhaust gas from which moisture has been removed from the condenser 24. Since moisture has been removed from the sensible heat removal exhaust gas supplied to the compressor at the separation part side 31 in the condenser 24, damage problems, which may be caused by moisture, of the compressor at the separation part side 31 may be prevented in advance. In addition, the moisture has been removed from the sensible heat removal exhaust gas supplied to the compressor at the separation part side 31 in the condenser 24 and the sensible heat removal exhaust gas has increased density, so that the power consumption of the compressor at the separation part side 31 may be reduced compared to the related art.

The pre-cooler 32 may be connected to the compressor at the separation part side 31 to receive compressed gas from the compressor at the separation part side 31 and may pre-cool the compressed gas. Since the compressed gas supplied to the pre-cooler 32 does not contain moisture, damage to the pre-cooler 32 due to moisture condensation in a process of precooling the compressed gas may be minimized.

The separator 33 may be connected to the pre-cooler 32 and separate solid carbon dioxide from the compressed gas precooled in the pre-cooler 32. In other words, solid carbon dioxide and gaseous nitrogen/oxygen may be separated by the separator 33. Here, since gaseous nitrogen/oxygen refers to the remaining gas after the solid carbon dioxide contained in the compressed gas is separated, hereinafter, for the convenience of description, the separated gaseous nitrogen/oxygen will be referred to as 'the remaining compressed gas'.

In this case, since the pre-cooled compressed gas supplied to the separator 33 does not contain moisture, the purity of solid carbon dioxide separated by the separator 33 may be increased compared to the related art. In addition, since carbon dioxide is separated and recovered in a solid state by the separator 33, a storage density of carbon dioxide may be increased, and, as the separate storage is possible at the same time as capture, the process may be simplified. Accordingly, when applied to mobility, it is possible to capture and store carbon dioxide with the minimum space.

Meanwhile, the remaining compressed gas may be supplied to the pre-cooler 32 and heat-exchanged with compressed gas passed through the compressor at the separation part side 31. After precooling the compressed gas, the remaining compressed gas may be vented to the outside.

The refrigerant heat recovery part 40 may recover heat of the second refrigerant heat-exchanged with the sensible heat recovery exhaust gas to the first refrigerant. To this end, the refrigerant heat recovery part 40 may include a compressor at the refrigerant heat recovery part side 41 which receives and compresses the first refrigerant passed through the heatsink 14.

The compressor at the refrigerant heat recovery part side 41 may be supplied with a first refrigerant through a third flow path L3, and the first refrigerant compressed by the compressor at the refrigerant heat recovery part side 41 may be supplied to the heat exchanger at the moisture removal part side 22.

Meanwhile, cold heat of the first refrigerant supplied to the heat exchanger at the moisture removal part side 22 may be utilized to cool the second refrigerant passed through the compressor at the moisture removal part side 21. After cooling the second refrigerant, the first refrigerant may be recovered to the first flow path L1 through a fourth flow path L4 and may be reused to generate electrical energy by using the sensible heat of the exhaust gas. Accordingly, the overall system efficiency may be improved.

The carbon dioxide separation and recovery system 1 having the configuration described above has an effect capable of increasing the purity of carbon dioxide separated and recovered from the exhaust gas by converting sensible heat recovered from exhaust gas into electric energy, and effectively removing moisture contained in the exhaust gas by utilizing the converted electric energy.

In addition, as the density of the exhaust gas increases in the process of removing the moisture contained in the exhaust gas by using the electric energy converted from the sensible heat recovered from the exhaust gas, the compression work required can be dramatically reduced in the process of separating and recovering carbon dioxide from the exhaust gas.

In addition, the heat generated in the process of removing the moisture contained in the exhaust gas by using the electric energy converted from the sensible heat recovered from the exhaust gas is reused for electric energy conversion, thereby having improved energy efficiency.

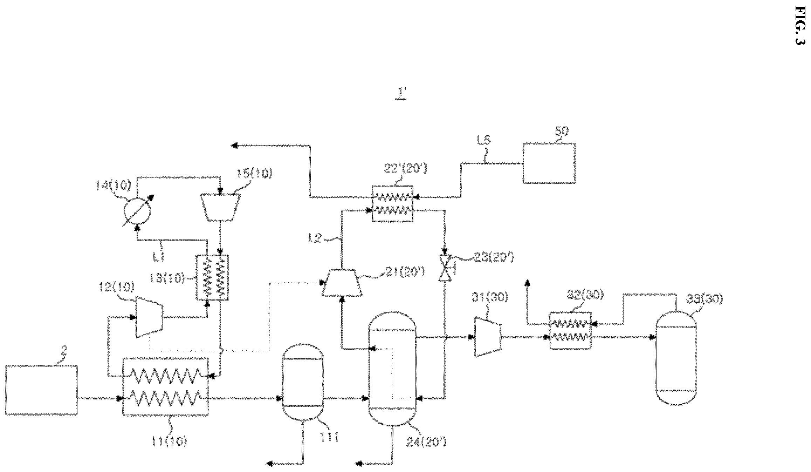

Hereinafter, a carbon dioxide separation and recovery system 1' according to another embodiment of the present invention will be described with reference to FIG. 3.

Referring to FIG. 3, the carbon dioxide separation and recovery system 1' according to another embodiment of the present invention may include an exhaust gas sensible heat recovery part 10, a moisture removal part 20', a separation part 30, and a supply part 50. However, the carbon dioxide separation and recovery system 1' illustrated in FIG. 3 is substantially the same as the carbon dioxide separation and recovery system 1 described with reference to FIGS. 1 and 2 except for the moisture removal part 20' and the supply part 50, and thus the moisture removal part 20' and the supply part 50 corresponding to the differences will be described below.

The moisture removal part 20' may include a compressor at the moisture removal part side 21, a heat exchanger at the moisture removal part side 22', an expansion valve 23, and a condenser 24. However, since the compressor at the moisture removal part side 21, the expansion valve 23, and the condenser 24 are substantially the same as the compressor at the moisture removal part side 21, the expansion valve 23, and the condenser 24 described with reference to FIGS. 1 and 2, the heat exchanger at the moisture removal part side 22' corresponding to the difference will be described below.

The heat exchanger at the moisture removal part side 22' may receive fluid for thermal transfer through the supply part 50. To this end, the heat exchanger at the moisture removal part side 22' may be connected to the supply part 50 via a fifth flow path L5.

In this case, the heat exchanger at the moisture removal part side 22' may cool the second refrigerant by exchanging heat between the fluid for thermal transfer supplied from the supply part 50 and the second refrigerant discharged from the compressor at the moisture removal part side 21. The fluid for thermal transfer heat-exchanged with the second refrigerant may be vented to the outside or, if necessary, recovered to the supply part 50. For example, the fluid for thermal transfer may be liquid fuel such as LNG.

Although the embodiments of the present invention have been described as specific embodiments, they are merely examples, and the present invention is not limited thereto, but should be interpreted to have the broadest scope in accordance with the basic idea disclosed in this specification. Those skilled in the art may combine/substitute the disclosed embodiments to implement patterns of shapes not described, but this also does not depart from the scope of the present invention. In addition, those skilled in the art may easily change or modify the disclosed embodiments on the basis of this specification, and it is clear that such changes or modifications also fall within the scope of the present invention.

## Claims

1. A carbon dioxide separation and recovery system comprising:
an exhaust gas sensible heat recovery part which recovers sensible heat of exhaust gas and generates electrical energy by using the sensible heat of the recovered exhaust gas;
a moisture removal part which is connected to the exhaust gas sensible heat recovery part and removes moisture contained in sensible heat recovery exhaust gas from which the sensible heat is recovered by using the electric energy generated in the exhaust gas sensible heat recovery part; and
a separation part which is connected to the moisture removal part to receive the sensible heat recovery exhaust gas from which moisture has been removed by the moisture removal part and separates solid carbon dioxide from the sensible heat recovery exhaust gas from which the moisture is removed.

2. The carbon dioxide separation and recovery system of claim 1, further comprising:
a first flow path configured to provide a path through which a first refrigerant capable of recovering the sensible heat of the exhaust gas by exchanging heat with the exhaust gas flows; and
a second flow path configured to provide a path through which a second refrigerant capable of removing the moisture contained in the sensible heat recovery exhaust gas by exchanging heat with the sensible heat recovery exhaust gas flows.

3. The carbon dioxide separation and recovery system of claim 2,
wherein the moisture removal part includes:
a compressor at a moisture removal part side disposed on the second flow path;
a heat exchanger at the moisture removal part side which is disposed on the second flow path and cools the second refrigerant discharged from the compressor at the moisture removal part side; and
a condenser which is disposed on the second flow path and condenses the moisture contained in the sensible heat recovery exhaust gas by exchanging heat between the second refrigerant cooled by the heat exchanger at the moisture removal part side and the sensible heat recovery exhaust gas.

4. The carbon dioxide separation and recovery system of claim 3,
wherein the exhaust gas sensible heat recovery part includes:
a heat exchanger at a sensible heat recovery part side which is disposed on the first flow path and transfers the sensible heat of the exhaust gas to the first refrigerant; and
a generator which is disposed on the first flow path, receives the first refrigerant discharged from the heat exchanger at the sensible heat recovery part side, and recovers the sensible heat of the exhaust gas recovered by the first refrigerant as the electric energy,
wherein the electric energy recovered through the generator is supplied to the compressor at the moisture removal part side.

5. The carbon dioxide separation and recovery system of claim 3,
wherein the exhaust gas sensible heat recovery part includes:
a generator which is disposed on the first flow path and recovers the sensible heat of the exhaust gas recovered by the first refrigerant as the electric energy;
a recuperator which is disposed on the first flow path and cools the first refrigerant passed through the generator; and
a heatsink which is disposed on the first flow path and removes heat of the first refrigerant discharged from the recuperator.

6. The carbon dioxide separation and recovery system of claim 5,
further comprising a refrigerant heat recovery part which recovers the heat of the second refrigerant heat-exchanged with the sensible heat recovery exhaust gas to the first refrigerant,
wherein the refrigerant heat recovery part includes a compressor at a refrigerant heat recovery part side which receives and compresses the first refrigerant passed through the heatsink, and
wherein the first refrigerant compressed by the compressor at the refrigerant heat recovery part side is supplied to the heat exchanger at the moisture removal part side.

7. The carbon dioxide separation and recovery system of claim 6,
wherein the exhaust gas sensible heat recovery part further includes a compressor at a sensible heat recovery part side which receives and compresses the first refrigerant passed through the heatsink, and
wherein the first refrigerant compressed by the compressor at the sensible heat recovery part side is supplied to the recuperator.

8. The carbon dioxide separation and recovery system of claim 7,
wherein the heat exchanger at the sensible heat recovery part side receives at least one of the first refrigerant discharged from the recuperator and the first refrigerant discharged from the heat exchanger at the moisture removal part side and exchanges heat with the exhaust gas.

9. The carbon dioxide separation and recovery system of any one of claims 3 to 8,
wherein the condenser includes:
a main body part to which the sensible heat recovery exhaust gas is supplied;
a tube part which is provided inside the main body part and to which the second refrigerant is supplied and flows; and
a surface treatment part which is provided on at least a part of an outer surface of the tube part and is made of a hydrophobic substance,
wherein, the moisture contained in the sensible heat recovery exhaust gas supplied to the main body part is condensed and removed by cooling heat of the second refrigerant supplied to the tube part, and the sensible heat recovery exhaust gas is cooled to increase the density of the sensible heat recovery exhaust gas.

10. The carbon dioxide separation and recovery system of claim 9,
wherein the separation part includes:
a compressor at a separation part side which is connected to the condenser and generates a compressed gas by receiving and compressing the sensible heat recovery exhaust gas having the moisture removed and the density increased;
a pre-cooler which is connected to the compressor at the separation part side and precools the compressed gas; and
a separator which is connected to the pre-cooler and separates the solid carbon dioxide from the compressed gas precooled by the pre-cooler,
wherein remaining compressed gas after the solid carbon dioxide is separated is supplied to the pre-cooler and is heat-exchanged with the compressed gas passed through the compressor at the separation part side.

11. The carbon dioxide separation and recovery system of any one of claims 3 to 10,
further comprising a supply part which is connected to the heat exchanger at the moisture removal part side and supplies fluid for thermal transfer to the heat exchanger at the moisture removal part side,
wherein the heat exchanger at the moisture removal part side exchanges heat between the fluid for thermal transfer supplied from the supply part and the second refrigerant discharged from the compressor at the moisture removal part side to cool the second refrigerant.
